# EUROPEAN PATENT APPLICATION

(11) **EP 4 274 379 A1**
(43) Date of publication of application: **08.11.2023**
(21) Application number: 21915366.5
(22) Date of filing: 29.01.2021
(51) Int. Cl.: H05B 6/12, H05B 6/06, F24C 15/10

(54) **INDUCTION HEATING TYPE COOKTOP AND OPERATING METHOD THEREOF**

(30) Priority: 31.12.2020 KR 20200189868
(71) Applicant: LG Electronics Inc., Yeongdeungpo-gu Seoul 07336 (KR)
(72) Inventor: OK, Seungbok, Seoul 08592 (KR); OH, Dooyong, Seoul 08592 (KR); SEONG, Hojae, Seoul 08592 (KR); PARK, Byeongwook, Seoul 08592 (KR)
(74) Representative: Vossius & Partner Patentanwälte Rechtsanwälte mbB
(86) International application number: PCT/KR2021/001259
(87) International publication number: WO 2022/145566

(57) **Abstract**

The present disclosure provides a cooktop and a method of operating the cooktop, and to obtain material information of a cooking container, the cooktop may comprise: a memory that stores material classification data; a measurement unit that acquires output data for each frequency in a search frequency range; and a material determination unit that compares the output data with the material classification data so as to obtain the material information of the cooking container.

## Description

### TECHNICAL FIELD

The present disclosure relates to an induction heating type cooktop.

### BACKGROUND ART

Various types of cooking appliances are used to heat food at home or in the restaurant. According to the related art, a gas stove using gas as a fuel has been widely used. However, recently, devices for heating an object to be heated, for example, a cooking container such as a pot, have been spread using electricity instead of the gas.

A method for heating the object to be heated using electricity is largely divided into a resistance heating method and an induction heating method. The electrical resistance method is a method for heating an object to be heated by transferring heat generated when electric current flows through a metal resistance wire or a non-metal heating body such as silicon carbide to the object to be heated (e.g., a cooking container) through radiation or conduction. In the induction heating method, when high-frequency power having a predetermined intensity is applied to a coil, eddy current is generated in the object to be heated using magnetic fields generated around the coil so that the object to be heated is heated.

Recently, most of the induction heating methods are applied to cooktops. This induction heating type cooktop may provide various functions for user convenience. For example, a cooktop using the induction heating method may provide a function of detecting whether food in a cooking container currently being heated is boiling to inform the detected result to the user. For this, the induction heating type cooktop may first sense a temperature of the cooking container to predict a temperature of food based on the sensed temperature. In this case, a relationship between a temperature of the cooking container and a temperature of food is changed according to a material, a thickness, and the like of the cooking container, and as a result, a malfunction such as outputting of a notification even though the food is not boiled may occur. Therefore, the induction heating type cooktop requires a method of identifying characteristics of the cooking container.

### DISCLOSURE OF THE INVENTION

### TECHNICAL PROBLEM

An object of the present disclosure is to provide an induction heating type cooktop capable of distinguishing cooking containers and an operating method thereof.

An object of the present disclosure is to provide an induction heating type cooktop capable of identifying characteristics of a cooking container and an operating method thereof.

### TECHNICAL SOLUTION

In a cooktop and an operating method thereof according to an embodiment of the present disclosure, an output value for each material characteristic of the cooking container in a predetermined frequency range is stored in advance to compare outputs measured before performing a heating mode with the previously stored output values, thereby identifying material characteristics of the cooking container.

In addition, in a cooktop and an operating method thereof according to an embodiment of the present disclosure, material classification data that is previously stored may be stored in a regression form so as to obtain material information of the cooking container.

In addition, in a cooktop and an operating method thereof according to an embodiment of the present disclosure, material information of a cooking container may be acquired using an error sum between output values measured through the measurement unit and output values according to material classification data.

### ADVANTAGEOUS EFFECTS

According to the present disclosure, since the material classification data for the predetermined frequency range is stored, there may be an advantage in that the ability to distinguish the material characteristics of the cooking container is improved compared to the case of using the measured values at the fixed number of frequencies, and thus, the accuracy of the material classification is improved.

In addition, since the material classification data for the predetermined frequency range is not stored as the individual output values, but stored in the regression form, there may be the advantage in that the memory space occupied by the material classification data is saved.

In addition, since the material of the cooking container is recognized by calculating the error sum for the predetermined frequency range without comparing the errors for each frequency, there may be the advantage in which the accuracy of the material recognition is improved by reducing the data dispersion.

### BRIEF DESCRIPTION OF THE DRAWINGS

FIG. 1 is a perspective view illustrating a cooktop and a cooking container according to an embodiment of the present disclosure.
FIG. 2 is a cross-sectional view illustrating the cooktop and the cooking container according to an embodiment of the present disclosure.
FIG. 3 is a circuit diagram of the cooktop according to an embodiment of the present disclosure.
FIG. 4 is a view illustrating output characteristics of the cooktop according to an embodiment of the present disclosure.
FIG. 5 is a control block diagram of the cooktop according to an embodiment of the present disclosure.
FIGS. 6 to 7 are views for explaining material classification data stored in the cooktop according to an embodiment of the present disclosure.
FIG. 8 is a flowchart illustrating an operating method of the cooktop according to an embodiment of the present disclosure.
FIG. 9 is a flowchart illustrating a method for operating in a material determination mode according to an embodiment of the present disclosure.
FIG. 10 is a view illustrating a first condition in which the cooktop terminates frequency scanning according to an embodiment of the present disclosure.
FIG. 11 is a view illustrating a second condition in which the cooktop terminates frequency scanning according to an embodiment of the present disclosure.
FIG. 12 is a view illustrating a third condition in which the cooktop terminates frequency scanning according to an embodiment of the present disclosure.
FIG. 13 is a flowchart illustrating a method for comparing output data with the material classification data in the cooktop according to an embodiment of the present disclosure.
FIG. 14 is a view for explaining a method for comparing the output data with the material classification data in the cooktop according to an embodiment of the present disclosure.
FIG. 15 is a view illustrating an example of a method for detecting a material characteristic regression equation in which the sum of errors is calculated to be the smallest in the cooktop according to an embodiment of the present disclosure.

### MODE FOR CARRYING OUT THE INVENTION

Hereinafter, embodiments relating to the present disclosure will be described in detail with reference to the accompanying drawings. Furthermore, terms, such as a "module" ad a "unit", are used for convenience of description, and they do not have different meanings or functions in themselves.

Hereinafter, an induction heating type cooktop and an operation method thereof according to an embodiment of the present disclosure will be described. For convenience of description, the "induction heating type cooktop" is referred to as a "cooktop".

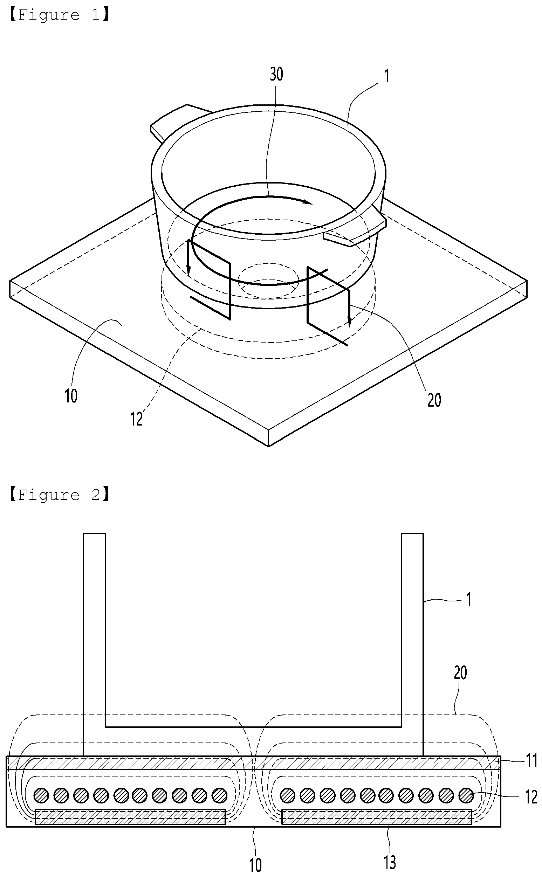

FIG. 1 is a perspective view illustrating a cooktop and a cooking container according to an embodiment of the present disclosure, and FIG. 2 is a cross-sectional view illustrating the cooktop and the cooking container according to an embodiment of the present disclosure.

A cooking container 1 may be disposed above the cooktop 10, and the cooktop 10 may heat a cooking container 1 disposed thereon.

First, a method for heating the cooking container 1 using the cooktop 10 will be described.

As illustrated in FIG. 1, the cooktop 10 may generate a magnetic field 20 so that at least a portion of the magnetic field 20 passes through the cooking container 1. Here, if an electrical resistance component is contained in a material of the cooking container 1, the magnetic field 20 may induce an eddy current 30 in the cooking container 1. Since the eddy current 30 generates heat in the cooking container 1 itself, and the heat is conducted or radiated up to the inside of the cooking container 1, contents of the cooking container 1 may be cooked.

When the material of the cooking container 1 does not contain the electrical resistance component, the eddy current 30 does not occur. Thus, in this case, the cooktop 10 may not heat the cooking container 1.

As a result, the cooking container 1 capable of being heated by the cooktop 10 may be a stainless steel container or a metal container such as an enamel or cast iron container.

Next, a method for generating the magnetic field 20 by the cooktop 10 will be described.

As illustrated in FIG. 2, the cooktop 10 may include at least one of an upper plate glass 11, a working coil 12, or a ferrite 13.

The upper plate glass 11 may support the cooking container 1. That is, the cooking container 1 may be placed on a top surface of the upper plate glass 11.

In addition, the upper plate glass 11 may be made of ceramic tempered glass obtained by synthesizing various mineral materials. Thus, the upper plate glass 11 may protect the cooktop 10 from an external impact.

In addition, the upper plate glass 11 may prevent foreign substances such as dust from being introduced into the cooktop 10.

The working coil 12 may be disposed below the upper plate glass 11. Current may or may not be supplied to the working coil 12 to generate the magnetic field 20. Specifically, the current may or may not flow through the working coil 12 according to on/off of an internal switching element of the cooktop 10.

When the current flows through the working coil 12, the magnetic field 20 may be generated, and the magnetic field 20 may generate the eddy current 30 by meeting the electrical resistance component contained in the cooking container 1. The eddy current may heat the cooking container 1, and thus, the contents of the cooking container 1 may be cooked.

In addition, heating power of the cooktop 10 may be adjusted according to an amount of current flowing through the working coil 12. As a specific example, as the current flowing through the working coil 12 increases, the magnetic field 20 may be generated more, and thus, since the magnetic field passing through the cooking container 1 increases, the heating power of the cooktop 10 may increase.

The ferrite 13 is a component for protecting an internal circuit of the cooktop 10. Specifically, the ferrite 13 serves as a shield to block an influence of the magnetic field 20 generated from the working coil 12 or an electromagnetic field generated from the outside on the internal circuit of the cooktop 10.

For this, the ferrite 13 may be made of a material having very high permeability. The ferrite 13 serves to induce the magnetic field introduced into the cooktop 10 to flow through the ferrite 13 without being radiated. The movement of the magnetic field 20 generated in the working coil 12 by the ferrite 13 may be as illustrated in FIG. 2.

The cooktop 10 may further include components other than the upper glass 11, the working coil 12, and the ferrite 13 described above. For example, the cooktop 10 may further include an insulator (not shown) disposed between the upper plate glass 11 and the working coil 12. That is, the cooktop according to the present disclosure is not limited to the cooktop 10 illustrated in FIG. 2.

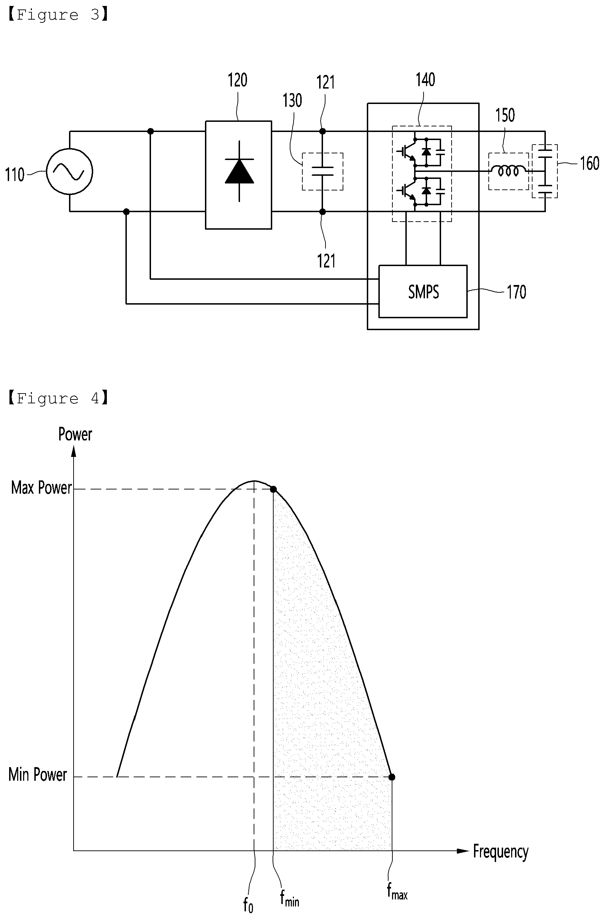

FIG. 3 is a circuit diagram of the cooktop according to an embodiment of the present disclosure.

Since the circuit diagram of the cooktop 10 illustrated in FIG. 3 is merely illustrative for convenience of description, the embodiment of the present disclosure is not limited thereto.

Referring to FIG. 3, the induction heating type cooktop may include at least some or all of a power supply 110, a rectifier 120, a DC link capacitor 130, an inverter 140, a working coil 150, a resonance capacitor 160, and an SMPS 170.

The power supply 110 may receive external power. Power received from the outside to the power supply 110 may be alternation current (AC) power.

The power supply 110 may supply an AC voltage to the rectifier 120.

The rectifier 120 is an electrical device for converting alternating current into direct current. The rectifier 120 converts the AC voltage supplied through the power supply 110 into a DC voltage. The rectifier 120 may supply the converted voltage to both DC ends 121.

An output terminal of the rectifier 120 may be connected to both the DC ends 121. Each of both the ends 121 of the DC output through the rectifier 120 may be referred to as a DC link. A voltage measured at each of both the DC ends 121 is referred to as a DC link voltage.

A DC link capacitor 130 serves as a buffer between the power supply 110 and the inverter 140. Specifically, the DC link capacitor 130 is used to maintain the DC link voltage converted through the rectifier 120 to supply the DC link voltage to the inverter 140.

The inverter 140 serves to switch the voltage applied to the working coil 150 so that high-frequency current flows through the working coil 150. The inverter 140 drives the switching element constituted by insulated gate bipolar transistors (IGBTs) to allow high-frequency current to flow through the working coil 150, and thus, a high-frequency magnetic field is generated in the working coil 150.

In the working coil 150, current may or may not flow depending on whether the switching element is driven. When current flows through the working coil 150, magnetic fields are generated. The working coil 150 may heat an cooking appliance by generating the magnetic fields as the current flows.

One side of the working coil 150 is connected to a connection point of the switching element of the inverter 140, and the other side is connected to the resonance capacitor 160.

The switching element is driven by a driver (not shown), and a high-frequency voltage is applied to the working coil 150 while the switching element operates alternately by controlling a switching time output from the driver. In addition, since a turn on/off time of the switching element applied from the driver (not shown) is controlled in a manner that is gradually compensated, the voltage supplied to the working coil 150 is converted from a low voltage into a high voltage.

The resonance capacitor 160 may be a component to serve as a buffer. The resonance capacitor 160 controls a saturation voltage increasing rate during the turn-off of the switching element to affect an energy loss during the turn-off time.

The SMPS 170 (switching mode power supply) refers to a power supply that efficiently converts power according to a switching operation. The SMPS 170 converts a DC input voltage into a voltage that is in the form of a square wave and then obtains a controlled DC output voltage through a filter. The SMPS 170 may minimize an unnecessary loss by controlling a flow of the power using a switching processor.

In the case of the cooktop 10 expressed by the circuit diagram illustrated in FIG. 3, a resonance frequency is determined by an inductance value of the working coil 150 and a capacitance value of the resonance capacitor 160. Then, a resonance curve may be formed around the determined resonance frequency, and the resonance curve may represent output power of the cooktop 10 according to a frequency band.

Next, FIG. 4 is a view illustrating output characteristics of the cooktop according to an embodiment of the present disclosure.

First, a Q factor (quality factor) may be a value representing sharpness of resonance in the resonance circuit. Therefore, in the case of the cooktop 10, the Q factor is determined by the inductance value of the working coil 150 included in the cooktop 10 and the capacitance value of the resonant capacitor 160. The resonance curve may be different depending on the Q factor. Thus, the cooktop 10 has different output characteristics according to the inductance value of the working coil 150 and the capacitance value of the resonant capacitor 160.

FIG. 4 illustrates an example of the resonance curve according to the Q factor. In general, the larger the Q factor, the sharper the shape of the curve, and the smaller the Q factor, the broader the shape of the curve.

A horizontal axis of the resonance curve may represent a frequency, and a vertical axis may represent output power. A frequency at which maximum power is output in the resonance curve is referred to as a resonance frequency f0.

In general, the cooktop 10 uses a frequency in a right region based on the resonance frequency f0 of the resonance curve. In addition, the cooktop 1 may have a minimum operating frequency and a maximum operating frequency, which are set in advance.

For example, the cooktop 10 may operate at a frequency corresponding to a range from the maximum operating frequency fmax to the minimum operating frequency fmin. That is, the operating frequency range of the cooktop 10 may be from the maximum operating frequency fmax to the minimum operating frequency fmin.

For example, the maximum operating frequency fmax may be an IGBT maximum switching frequency. The IGBT maximum switching frequency may mean a maximum driving frequency in consideration of a resistance voltage and capacity of the IGBT switching element. For example, the maximum operating frequency fmax may be 75 kHz.

The minimum operating frequency fmin may be about 20 kHz. In this case, since the cooktop 10 does not operate at an audible frequency (about 16 Hz to 20 kHz), noise of the cooktop 10 may be reduced.

Since setting values of the above-described maximum operating frequency fmax and minimum operating frequency fmin are only examples, the embodiment of the present disclosure is not limited thereto.

When receiving a heating command, the cooktop 10 may determine an operating frequency according to a heating power level set by the heating command. Specifically, the cooktop 10 may adjust the output power by decreasing in operating frequency as the set heating power level is higher and increasing in operating frequency as the set heating power level is lower. That is, when receiving the heating command, the cooktop 10 may perform a heating mode in which the cooktop operates in one of the operating frequency ranges according to the set heating power.

When receiving the heating command, the cooktop 10 according to an embodiment of the present disclosure may operate in a material determination mode before operating in the heating mode according to the heating command.

The material determination mode may be an operation mode for acquiring material information of the cooking container 1 placed on the cooktop 10.

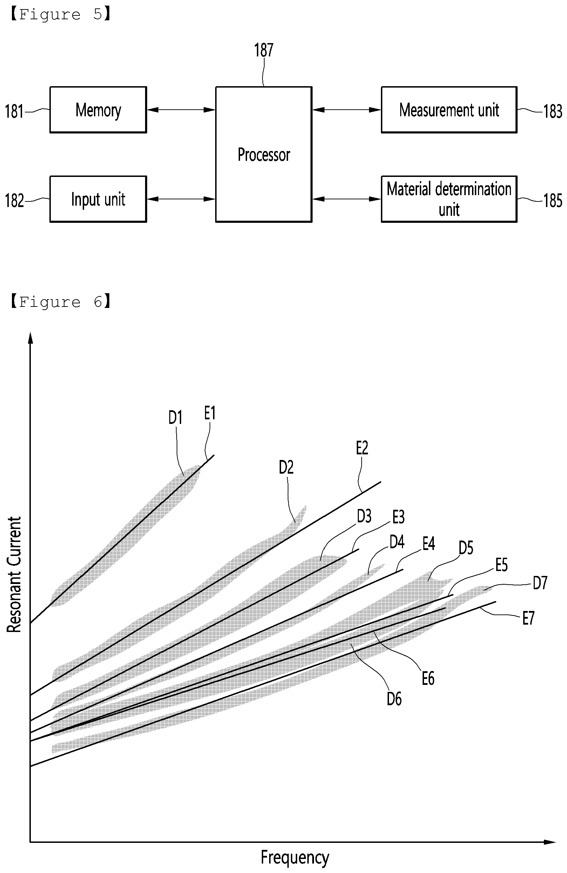

FIG. 5 is a control block diagram of the cooktop according to an embodiment of the present disclosure.

The cooktop 10 according to an embodiment of the present disclosure may include at least some or all of a memory 181, an input unit 182, a measurement unit 183, a material determination unit 185, and a processor 187.

The memory 181 may store material classification data.

The material classification data may be data used to classify a material of the cooking container 1 placed on the cooktop 1. The material classification data stored in each cooktop 10 may vary depending on the performance and types of the cooktops 1. The material classification data may include previously acquired output values in a predetermined frequency range for each material characteristic of the cooking container 1.

The material classification data may include regression equations in which output values (e.g., resonant current or phase, etc.) for each frequency are derived for the predetermined frequency range, and each regression equation may be classified for each material characteristic of the cooking container 1. That is, the material classification data may be expressed as a regression equation for each container material calculated on the basis of previously acquired output values.

In the present disclosure, it is assumed that the output value is resonant current, that is, a current value flowing through the working coil 150. However, this is merely an example, and which one to measure as the output value for each frequency may be changed depending on a design.

Specifically, the material classification data may include a first regression equation for a first material characteristic, a second regression equation for a second material characteristic, a third regression equation for a third material characteristic,..., an N-th regression equation for an N-th material characteristic. Here, each of the first to N-th material characteristics may be classified according to the types of materials of the cooking container 1 (e.g., stainless steel, enamel, cast iron, metal, etc.), or even if the types of materials of the cooking container 1 are the same, the first to N-th material characteristics may be classified according to a manufacturer of the cooking container 1, a thickness of the cooking container 1, and the like.

The first to N-th regression equations may be derived from experimental results directly measured for the cooking containers 1 having various material properties.

FIGS. 6 to 7 are views for explaining the material classification data stored in the cooktop according to an embodiment of the present disclosure.

First dots D1 may be output values (e.g., resonant current) for each frequency when the cooking container 1 having the first material characteristic is placed on the cooktop 1, and the first regression equation E1 may be derived by the first points D1.

Second dots D2 may be output values (e.g., resonant current) for each frequency when the cooking container 1 having the second material characteristic is placed on the cooktop 1, and the second regression equation E1 may be derived by the second points D2.

Third dots D3 may be output values (e.g., resonant current) for each frequency when the cooking container 1 having the third material characteristic is placed on the cooktop 1, and the third regression equation E1 may be derived by the third points D3.

Forth dots D4 may be output values (e.g., resonant current) for each frequency when the cooking container 1 having the fourth material characteristic is placed on the cooktop 1, and the fourth regression equation E1 may be derived by the fourth points D4.

Fifth dots D5 may be output values (e.g., resonant current) for each frequency when the cooking container 1 having the fifth material characteristic is placed on the cooktop 1, and the fifth regression equation E1 may be derived by the fifth points D5.

Sixth dots D6 may be output values (e.g., resonant current) for each frequency when the cooking container 1 having the sixth material characteristic is placed on the cooktop 1, and the sixth regression equation E1 may be derived by the sixth points D6.

Seventh dots D7 may be output values (e.g., resonant current) for each frequency when the cooking container 1 having the seventh material characteristic is placed on the cooktop 1, and the seventh regression equation E1 may be derived by the seventh points D7.

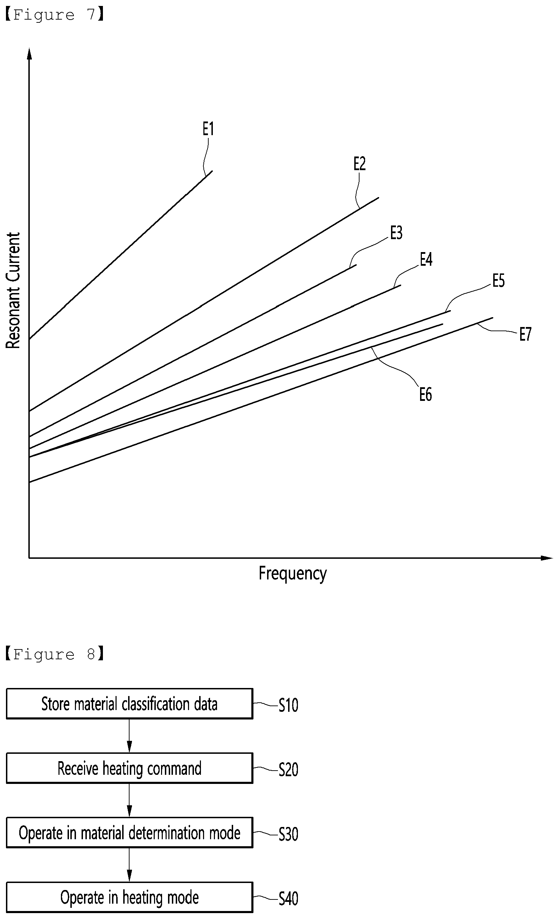

The curves illustrated in FIG. 7 may be curves representing the first to seventh regression equations E1 to E7.

In FIGS. 6 to 7, only the first to seventh regression equations for the cooking container 1 having the first to seventh material characteristics are shown, but these are merely an example, and the number of regression equations may be more or less.

As described above, when the material classification data is acquired for the predetermined frequency range, the discrimination performance may be improved compared to the case in which the material classification data is acquired for the fixed predetermined number of frequencies, and thus, there may be an advantage in that accuracy of the material classification is improved.

In addition, since the material classification data is not stored as the output values for the predetermined frequency range, but stored in the regression form, there may be an advantage in that a memory space occupied by the material classification data is saved.

According to an embodiment, the material identification data may be stored as the output values for each frequency belonging to the predetermined frequency range.

The input unit 182 may receive a user input. For example, the input unit 182 may receive a heating power selection input, a heating start/end input, and the like.

The measurement unit 183 may perform frequency scanning in the material determination mode. The frequency scanning may refer to an operation of acquiring output data by measuring the output values at each frequency while sequentially changing frequencies in a search frequency range. The output data may be constituted by the output values measured at each frequency.

The material determination unit 185 may acquire material information of the cooking container 1 placed on the cooktop 1. As a specific example, the material determination unit 185 may acquire material information of the cooking container 1 using the output data acquired by the measurement unit 183.

The processor 187 may control at least some or all of the memory 181, the input unit 182, the measurement unit 183, and the material determination unit 185. In addition, the processor 187 may control each of the internal components of the cooktop 1.

Each of the configurations of the cooktop 10 illustrated in FIG. 5 is only classified for convenience of description and is not limited thereto. That is, the components of the cooktop 10 illustrated in FIG. 5 may be integrally formed without being separated from each other or may further include other components.

FIG. 8 is a flowchart illustrating an operating method of the cooktop according to an embodiment of the present disclosure.

The cooktop 1 may store material classification data (S10) .

As the material classification data has been described in detail above, duplicated descriptions will be omitted.

The material classification data may be stored as default when the cooktop 1 is manufactured.

In addition, according to an embodiment, the material classification data stored in the cooktop 1 may be supplemented in a process of use. For example, as a use time of the cooktop 1 is accumulated, an error rate of the material classification data may increase as abrasion and performance degradation of parts occur. In order to improve such an error, a supplementary mode of correcting at least one regression equation may be implemented.

The cooktop 1 may receive a heating command (S20).

The cooktop 1 may receive the heating command through the input unit 182. The input unit 182 may receive a command to select a heating power level when receiving the heating command. For example, the input unit 182 may receive the heating command with a heating power level 3, but this is merely an example.

When receiving the heating command, the cooktop 1 may operate in a material determination mode (S30).

When receiving the heating command, the processor 187 may perform the material determination mode before executing the heating mode. That is, the cooktop 1 may operate in the heating mode after operating in the material determination mode.

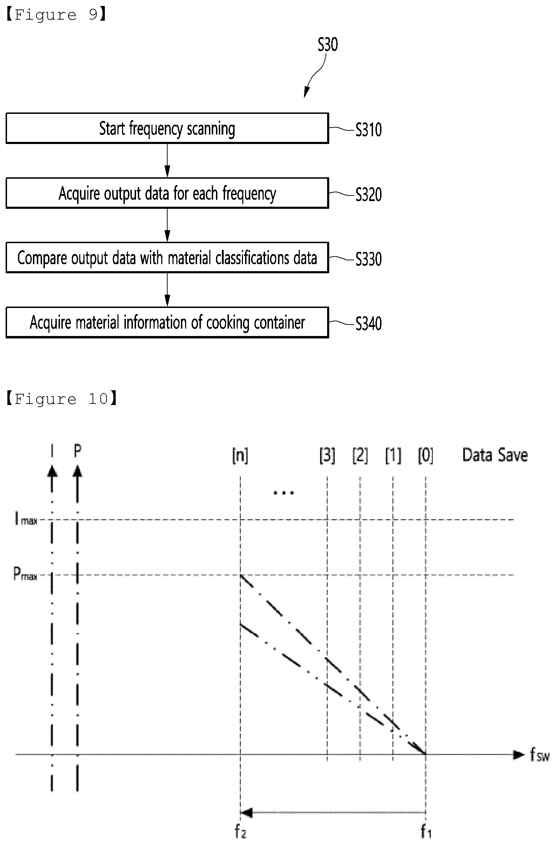

FIG. 9 is a flowchart illustrating a method for operating in the material determination mode according to an embodiment of the present disclosure.

FIG. 9 illustrates a flowchart embodying the operation S30 of FIG. 8.

The processor 187 may control the measurement unit 183 to start the frequency scanning (S310).

The measurement unit 183 may perform the frequency scanning for the search frequency range regardless of the heating power level according to the heating command.

The search frequency range may refer to a range of frequencies to be sequentially controlled before the heating mode in order to acquire the material information of the cooking container 1.

The measurement unit 183 may select the search frequency range from the first frequency to the second frequency.

Here, the first frequency may be a maximum operating frequency. Alternatively, the first frequency may be any one of values within a predetermined ratio (e.g., 5%) of the maximum operating frequency. That is, the first frequency may be equal to or less than the maximum operating frequency.

This first frequency may be a fixed value. The first frequency may be determined by the performance of the cooktop 1.

The second frequency may be a value determined by specific operating conditions. The second frequency may include an operating frequency when the cooktop 1 has a maximum power level, an operating frequency when maximum current flows through the working coil 150, and a minimum operating frequency. That is, the measurement unit 183 may terminate the frequency scanning when the frequency reaches the operating frequency when reaching the maximum power level, the operating frequency when the maximum current flows through the working coil 150, or the minimum operating frequency.

Next, with reference to FIGS. 10 to 12, conditions for the cooktop 10 to terminate the frequency scanning will be described.

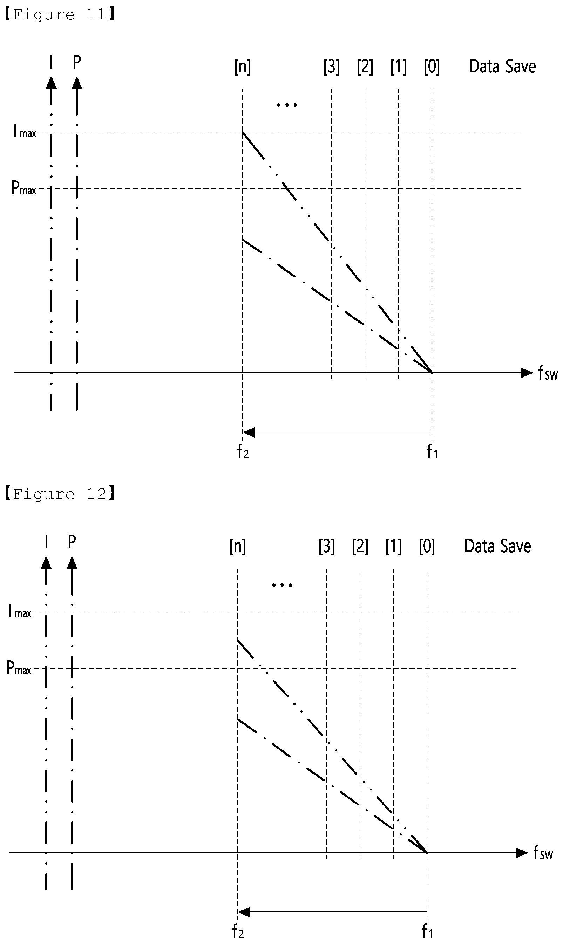

FIG. 10 is a view illustrating a first condition in which the cooktop terminates the frequency scanning according to an embodiment of the present disclosure, FIG. 11 is a view illustrating a second condition in which the cooktop terminates the frequency scanning according to an embodiment of the present disclosure, and FIG. 12 is a view illustrating a third condition in which the cooktop terminates the frequency scanning according to an embodiment of the present disclosure.

When the frequency scanning is started, the cooktop 1 may measure and store output values at each frequency while sequentially reducing the frequency started from the first frequency. Also, the cooktop 1 may sense output power of the cooktop and current flowing through the working coil 150 while performing the frequency scanning.

As illustrated in FIG. 10, the cooktop 1 may terminate the frequency scanning when the output power P reaches a maximum output power Pmax. Alternatively, the cooktop 1 may terminate the frequency scanning when the current I flowing through the working coil 150 reaches maximum allowable current Imax, as illustrated in FIG. 11. Alternatively, in the cooktop 1, as shown in FIG. 12, the output power P does not reach the maximum output power Pmax, and the current I flowing through the working coil 150 does not reach the maximum allowable current Imax, but the frequency scanning may be terminated when the operating frequency (switching frequency) reaches the minimum operating frequency fmin.

In other words, the measurement unit 183 may terminate the frequency scanning when reaching the maximum output of a burner, the maximum allowable current of the working coil, or the minimum operating frequency.

This is to allow the cooktop 1 to operate in a stable region. Specifically, the wider the search frequency range is set, the better the discrimination performance of the material discrimination, but a risk of burnout of the inverter 140 may also increase. Therefore, the frequency of the inverter 140 is limited by limiting the second frequency to a frequency under a specific operating condition (e.g., when the maximum thermal power is applied, when the maximum current flows through the working coil 150, or when the minimum operating frequency operates) to minimize the burnout problems.

Again, FIG. 9 will be described.

The measurement unit 183 may acquire output data for each frequency (S320).

The measurement unit 183 may acquire output data by measuring output values for each frequency through the frequency scanning. The measurement unit 183 may acquire output data while sequentially reducing the operating frequency from the first frequency to the second frequency. That is, the measurement unit 183 may acquire the measured output values as the output data while adjusting the operating frequency to each frequency corresponding to the search frequency range.

The material determination unit 185 may compare the output data with the material classification data (S330).

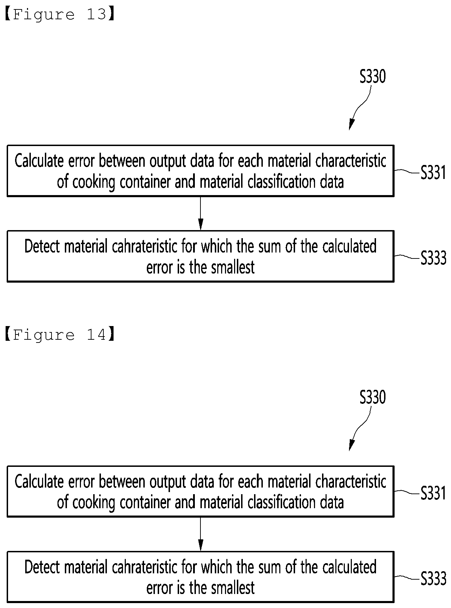

FIG. 13 is a flowchart illustrating a method for comparing the output data with the material classification data in the cooktop according to an embodiment of the present disclosure.

That is, FIG. 13 illustrates a flowchart embodying the operation S330 of FIG. 9.

The material determination unit 185 may calculate an error between the output data and the material classification data for each material characteristic of the cooking container 1 (S331).

The material determination unit 185 may calculate errors by calculating a difference operation between the output values measured by the measurement unit 183 and the output values according to the material classification data.

Specifically, the material determination unit 185 may calculate an error between an output value for each frequency according to the regression equation and an output value for each frequency of the output data for each regression equation for each material characteristic.

FIG. 14 is a view for explaining a method for comparing the output data with the material classification data in the cooktop according to an embodiment of the present disclosure.

As illustrated in FIG. 14, the output data may be input to the material classification data.

The material determination unit 185 may detect material characteristics for which the sum of the calculated errors is the smallest (S333).

The material determination unit 185 may calculate the sum of the errors by calculating the sum of absolute values of the errors.

Specifically, the material determination unit 185 may calculate the sum of errors calculated for each material characteristic.

That is, the material determination unit 185 may calculate the sum of errors between the output value for each frequency according to the first material characteristic regression equation and the output value for each frequency of the output data, calculate the sum of errors between the output value for each frequency according to the second material characteristic regression equation and the output value for each frequency of the output data,...., and calculate the sum of errors between the output value for each frequency according to the third material characteristic regression equation and the output value for each frequency of the output data.

The material determination unit 185 may detect a material characteristic regression equation in which the error sum is the smallest among the calculated error sum.

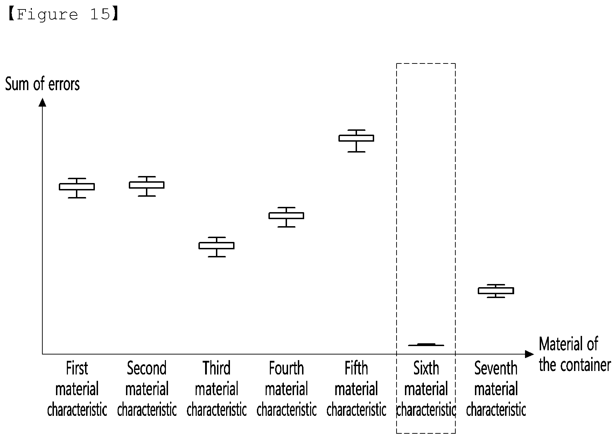

FIG. 15 is a view illustrating an example of a method for detecting the material characteristic regression equation in which the sum of errors is calculated to be the smallest in the cooktop according to an embodiment of the present disclosure.

As illustrated in FIG. 15, the material determination unit 185 may detect the material characteristic for which the error sum is the smallest among the calculated error sums.

FIG. 9 will be described again.

The material determination unit 185 may acquire material information of the cooking container 1 based on a comparison result between the output data and the material classification data (S340).

The material determination unit 185 may calculate an error between the output data and the material classification data for each frequency corresponding to the search frequency range, and recognize the material characteristic for which the sum of the calculated errors is the smallest as the material of the cooking container.

That is, the material determination unit 185 may recognize the material characteristic corresponding to the material characteristic regression equation in which the error sum is the smallest as the material information of the cooking container 1.

Again, FIG. 8 will be described.

When the material information of the cooking container 1 is acquired, the material determination unit 185 may terminate the material determination mode to operate in the heating mode (S30).

The processor 187 may operate in the heating mode by reflecting the material information of the cooking container 1 determined in the material determination mode. That is, the processor 187 may differently control the operation method in the heating mode when the material information of the cooking container acquired in the material determination mode is different with respect to the same heating command. For example, the processor 187 may differently control the operating frequency in the heating mode even if the heating power level is the same when the cooking container 1 determined in the material determination mode is different.

As described above, the cooktop 10 according to the present disclosure may recognize the material of the cooking container 1 by calculating the error sum for the predetermined frequency range without recognizing the material of the cooking container 1 through the comparison of each frequency. Therefore, there may be an advantage of improving accuracy of the material recognition by reducing data dispersion.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present disclosure is to be considered illustrative, and not restrictive, and the technical spirit of the present disclosure is not limited to the foregoing embodiment.

Therefore, the scope of the present disclosure is defined not by the detailed description of the invention but by the appended claims, and all differences within the scope will be construed as being included in the present disclosure.

## Claims

1. A cooktop configured to heat a cooking container, the cooktop comprising:
a memory configured to store material classification data;
a measurement unit configured to measure output values for each frequency in a search frequency range; and
a material determination unit configured to compare the output values acquired through the measurement unit with output values depending on the material classification data with respect to the respective frequencies to acquire material information of the cooking container.

2. The cooktop according to claim 1, wherein the material determination unit is configured to calculate errors between the output values measured through the measurement unit for material characteristics of the cooking container and the output values depending on the material classification data so as to be recognized as a material of the cooking container based on the calculated errors.

3. The cooktop according to claim 2, wherein the material determination unit is configured to calculate the errors through a difference operation between the output values measured through the measurement unit and the output values depending on the material classification data.

4. The cooktop according to claim 3, wherein the material determination unit is configured to calculate the sum of the errors through the sum operation of the absolute values of the errors.

5. The cooktop according to claim 4, wherein the material determination unit is configured to allow a material characteristic for which the sum of the calculated errors is the smallest as the material of the cooking container.

6. The cooktop according to claim 1, further comprising a processor configured to perform a material determination mode for acquiring the material information of the cooking container before a heating mode according to the heating command is performed.

7. The cooktop according to claim 6, wherein the processor is configured to differently control an operation method in the heating mode when the material information of the cooking container acquired in the material determination mode are different from each other with respect to the same heating command.

8. The cooktop according to claim 1, wherein the measurement unit is configured to set a range from a first frequency to a second frequency as the search frequency range,
wherein the first frequency is less than or equal to a maximum operating frequency, and
the second frequency comprises an operating frequency when maximum firepower is applied and an operating frequency and a minimum operating frequency when maximum current flows through a working coil.

9. The cooktop according to claim 8, wherein the measurement unit is configured to measure measurement values for each frequency while sequentially reducing the operating frequency from the first frequency to the second frequency.

10. The cooktop according to claim 1, wherein the measurement unit is configured to measure the output values for each frequency while adjusting the operating frequency to each frequency corresponding to the search frequency range.

11. The cooktop according to claim 10, wherein the output values are values of current flowing through a working coil.

12. The cooktop according to claim 1, wherein the material classification data comprises a regression equation for each material of the container, which is calculated based on the output values previously acquired in a predetermined frequency range for each material characteristic of the cooking container.

13. An operation method of a cooktop, which is performed to heat a cooking container, the operation method comprising:
storing material classification data;
measuring output values for each frequency in a search frequency range; and
comparing the measured output values with output values depending on the material classification data with respect to the respective frequencies to acquire material information of the cooking container.

14. The operation method according to claim 13, wherein the acquiring of the material information of the cooking container comprises:
calculating errors between the output values measured for each material characteristic of the cooking container and the output values depending on the material classification data; and
recognizing the material characteristic for which the sum of the calculated errors is the smallest as a material of the cooking container.

15. The operation method according to claim 13, further comprising:
receiving a heating command for the cooking container; and
operating in a heating mode according to the heating command,
wherein the acquiring of the output data and the acquiring of the material information of the cooking container are performed before operating in the heating mode.

16. The operation method according to claim 13, wherein the acquiring of the output data comprises setting a range from a first frequency to a second frequency as the search frequency range,
wherein the first frequency is less than or equal to a maximum operating frequency, and
the second frequency comprises an operating frequency when maximum firepower is applied and an operating frequency when maximum current flows through a working coil and a minimum operating frequency.

17. The operation method according to claim 16, wherein the acquiring of the output data comprises measuring measurement values for each frequency while sequentially reducing the operating frequency from the first frequency to the second frequency.
